# EUROPEAN PATENT SPECIFICATION

(11) **EP 3 355 402 B1**
(45) Date of publication and mention of the grant of the patent: **31.03.2021**
(21) Application number: 16865926.6
(22) Date of filing: 11.11.2016
(51) Int. Cl.: H01M 10/12, H01M 2/28, H01M 4/68, H01M 4/73, H01M 10/14

(54) **LEAD STORAGE BATTERY AND METHOD FOR PRODUCING SAME**
BLEIAKKUMULATOR UND VERFAHREN ZUR HERSTELLUNG DAVON
ACCUMULATEUR AU PLOMB ET SON PROCÉDÉ DE PRODUCTION

(30) Priority: 17.11.2015 JP 2015224955
(43) Date of publication of application: 01.08.2018
(73) Proprietor: GS Yuasa International Ltd., Kyoto-shi, Kyoto 601-8520 (JP)
(72) Inventor: MURATA, Tetsuyuki, Kadoma-shi Osaka 571-8501 (JP); MORIKAWA, Yuki, Kadoma-shi Osaka 571-8501 (JP); TAKEZAWA, Hideharu, Kadoma-shi Osaka 571-8501 (JP); ANDO, Kazunari, Kosai-shi Shizuoka 431-0452 (JP)
(74) Representative: Isarpatent
(86) International application number: PCT/JP2016/004871
(87) International publication number: WO 2017/085922

(56) References cited:
- JP-A- H1 145 697
- JP-A- H04 137 357
- JP-A- 2008 146 960
- JP-A- 2012 089 296
- JP-A- 2015 028 901

## Description

### [Technical Field]

The present invention relates to a lead-acid battery.

### [Background Art]

Since lead-acid batteries are inexpensive, have relatively high battery voltages, and can provide a large amount of power, they are being used for cell starters for vehicles such as an automobile, and various other applications. A lead-acid battery includes a plurality of positive electrodes containing lead dioxide as a positive electrode active material, a plurality of negative electrodes containing lead as a negative electrode active material, separators interposed between the positive electrodes and the negative electrodes that are adjacent to each other, and an electrolyte containing sulfuric acid. Usually, the positive electrodes and the negative electrodes include the respective grid-like current collectors for attaching active materials thereto.

Each of the plurality of positive electrodes and the plurality of negative electrodes is connected in parallel to a positive electrode strap or a negative electrode strap via a lug portion that is integral with the corresponding current collector.

When the boundary between the negative electrode strap and the negative electrode lug portion is exposed from the electrolyte as a result of repeated charging and discharging, corrosion advances from the boundary between the negative electrode lug portion and the negative electrode strap as the starting point, so that the lead-acid battery may reach the end of its life earlier than expected. For this problem, PTL 1 proposes placing an alloy layer containing an additive element such as Ag and Bi on the surface of the negative electrode lug portion and PTL 2 proposes an electrode plate group welding method of a lead storage battery in a cast-on-strap method, wherein covering layers of a lead-bismuth alloy are formed on the surfaces of lugs of electrode plates, and the lugs of the electrode plates are soaked and solidified in a molten lead.

### [Citation List]

### [Patent Literature]

[PTL 1] Japanese Laid-Open Patent Publication No. 2008-146960
[PTL2] Japanese Laid-Open Patent Publication No. H04-137357

### [Summary of Invention]

### [Technical Problem]

By placing an alloy layer containing an additive element on the surface of the negative electrode lug portion, it is possible to inhibit the corrosion at the boundary between the negative electrode lug portion and the negative electrode strap. However, in the case where antimony (Sb) is contained in the positive electrode grid in order to increase adhesion of the active material, it is difficult to sufficiently inhibit the corrosion at the boundary between the negative electrode lug portion and the negative electrode strap. The reason is that if the antimony that has been dissolved from the positive electrode grid is adsorbed in a gap formed at the boundary between the negative electrode lug portion and the negative electrode strap, a local reaction advances, promoting the corrosion of lead.

### [Solution to Problem]

In view of the foregoing, the present invention provides a lead-acid battery according to claim 1.

The present invention also provides a method for manufacturing the above-described lead-acid battery, according to claim 6.

### [Advantageous Effects of Invention]

According to the present invention, the life of a lead-acid battery is enhanced.

### [Brief Description of Drawings]

[FIG. 1] A partially cut-away perspective view of a lead-acid battery according to an embodiment of the present invention.
[FIG. 2] A front view of a positive electrode of the lead-acid battery shown in FIG. 1.
[FIG. 3] A front view of a negative electrode of the lead-acid battery shown in FIG. 1.
[FIG. 4] An explanatory diagram of a process of welding a negative electrode lug portion to a negative electrode strap, as viewed in a direction that is parallel to the liquid surface of an electrolyte and perpendicular to the thickness direction of the negative electrode.
[FIG. 5] An explanatory diagram of fillets formed at the boundary between a principal surface of the negative electrode strap and side surfaces of the negative electrode lug portion.

### [Description of Embodiment]

A lead-acid battery according to the present invention includes an electrode plate group, and an electrolyte containing sulfuric acid, and the electrode plate group includes a plurality of positive electrodes, a positive electrode strap that connects the plurality of positive electrodes in parallel, a plurality of negative electrodes; a negative electrode strap that connects the plurality of negative electrodes in parallel, and separators interposed between the negative electrodes and the positive electrodes that are adj acent to each other. Each of the plurality of positive electrodes includes a positive electrode active material, a positive electrode grid that supports the positive electrode active material thereon, and a positive electrode lug portion that is integral with the positive electrode grid and connects the positive electrode to the positive electrode strap. Each of the plurality of negative electrodes includes a negative electrode active material, a negative electrode grid that supports the negative electrode active material thereon, and a negative electrode lug portion that is integral with the negative electrode grid and connects the negative electrode to the negative electrode strap.

The connection between the positive electrode strap and the positive electrode lug portions and the connection between the negative electrode strap and the negative electrode lug portions are both achieved by welding. Accordingly, a welding mark of lead alloys is formed at the boundary between the positive electrode strap and the positive electrode lug portions and the boundary between the negative electrode strap and the negative electrode lug portions.

Each positive electrode grid contains antimony. The antimony contained in the positive electrode grid has the effect of increasing the adhesion between the positive electrode active material and the positive electrode grid to inhibit the detachment of the active material during charge/discharge, thus prolonging the cycle life.

The antimony may be contained in the entire the positive electrode grid, or the antimony may be contained only in the surface layer portion of the positive electrode grid. In the case where the antimony is contained in the entire positive electrode grid, a lead alloy containing antimony may be prepared in advance. After molding this alloy into a plate member, the plate member may be processed into a grid body including a lug portion. On the other hand, in the case where antimony is contained only in the surface layer portion of the positive electrode grid, lead or a lead alloy free of antimony may be molded into a plate member. Thereafter, a lead alloy sheet containing antimony may be joined to the surface of the plate member, and the plate member may be thereafter processed into a grid body including a lug portion. Note that antimony may be contained in a positive electrode connection member including the positive electrode strap. In this case, a lead alloy containing antimony may be prepared in advance, and the lead alloy may be processed into the positive electrode strap or the positive electrode connection member.

The antimony content in the positive electrode grid is preferably 0.01 mass% or more and 0.1 mass% or less, more preferably 0.015 mass% or more and 0.075 mass% or less. Here, the antimony content in the positive electrode grid is the ratio of the antimony content contained in the positive electrode grid, relative to the total mass of the positive electrode grid. Accordingly, when antimony is contained only in the surface layer portion of the positive electrode grid, it is necessary to set the antimony content in the surface layer portion to be greater than the above-described range in order to satisfy the above-described content. In addition, the antimony content in the positive electrode connection member including the positive electrode strap is preferably 0.5 mass% or more and 5 mass% or less.

Meanwhile, if the antimony is dissolved from the positive electrode grid and precipitates in the gap in a welding mark formed at the boundary between the negative electrode strap and the negative electrode lug portion, a local reaction advances, causing life degradation of the lead-acid battery. To inhibit such degradation, it is necessary to provide a surface layer portion containing bismuth on a side surface of the negative electrode lug portion, and to allow a sufficient amount of bismuth to remain in the welding mark. However, if an additive element is merely provided on the surface of the negative electrode lug portion, and the negative electrode lug portion is connected to the negative electrode strap as in the conventional technique, the additive element will flow out during connection of the negative electrode lug portion and the negative electrode strap, so that only a slight amount of the additive element remains at the boundary.

In order to allow a sufficient amount of bismuth to remain in the welding mark, it is necessary to form fillets containing bismuth at the boundary between the principal surface of the negative electrode strap and side surfaces of the negative electrode lug portion (i.e., corner portions formed by the principal surface of the negative electrode strap and side surfaces of the negative electrode lug portion) at the time of welding the negative electrode lug portion to the principal surface of the negative electrode strap. At this time, if the fillets contain 10 mass% or more of bismuth, a local reaction between antimony and lead is inhibited, making it possible to avoid a reduction in the life of the lead-acid battery that may be caused by a degradation of the boundary between the negative electrode strap and the negative electrode lug portion.

In the case where the surface layer portion containing bismuth is provided on the negative electrode lug portion, lead or a lead alloy free of bismuth may be molded into a plate member. Thereafter, a lead alloy sheet (or lead alloy foil) containing bismuth may be joined to the surface of the region of the plate member that corresponds to the lug portion, and the negative electrode lug portion and the negative electrode grid portion may be subsequently cut out from the plate member. For example, 10 mass% or more and 30 mass% or less of bismuth may be contained in the lead alloy sheet containing bismuth. Note that the lead alloy sheet containing bismuth does not need to be joined to the negative electrode grid portion that is to be processed in a grid form. The lead alloy sheet containing bismuth may be a binary alloy (Pb-Bi alloy), but may further contain a third different element. However, it is desirable that the concentration of the third element is 1 mass% or less. Examples of the third element include Sn, Ca, and Ag.

Next, a method for manufacturing the above-described lead-acid battery includes the steps of: (i) stacking a plurality of positive electrodes and a plurality of negative electrodes with separators interposed therebetween, to obtain a stack; and (ii) welding positive electrode lug portions included in the stack to a positive electrode strap, and further welding negative electrode lug portions included in the stack to a negative electrode strap, to form an electrode plate group. Here, the step of welding the negative electrode lug portions to the negative electrode strap includes: providing the negative electrode strap (or a precursor thereof); bringing an end face of each of the negative electrode lug portions into abutment with a principal surface of the negative electrode strap, the negative electrode lug portions each including a surface layer portion containing, for example, 10 mass% or more and 30 mass% or less of bismuth on a side surface thereof; and melting at least the principal surface of the negative electrode strap and the end face of each of the negative electrode lug portions, to weld the negative electrode lug portions to the negative electrode strap, and to form a fillet containing bismuth at a boundary between the principal surface of the negative electrode strap and the side surface of each of the negative electrode lug portions. That is, in the above-described manufacturing method, a negative electrode strap (or a precursor thereof) and negative electrodes each including a surface layer portion containing bismuth on opposite side surfaces of a lug portion are provided prior to welding.

At the time of welding the negative electrode lug portions to the negative electrode strap, the negative electrode strap is placed on upper end portions of the negative electrode lug portions, and then, the negative electrode strap is heated from above. By performing welding in this manner, under the self weight of the negative electrode strap, the upper end portions of the negative electrode lug portions are welded so as to be embedded on the inner side of the principal surface of the melted negative electrode strap. This can increase the joining strength between the negative electrode lug portions and the negative electrode strap. At this time, a welded portion derived from end faces of the negative electrode lug portions and/or side surfaces in the vicinity of the end faces is formed inward of the principal surface of the negative electrode strap. Accordingly, bismuth is introduced on the inner side of the principal surface of the negative electrode strap. The bismuth present on the inner side of the principal surface of the negative electrode strap is derived from the surface layer portions that have been covering the side surfaces in the vicinity of the end faces of the negative electrode lug portions embedded in the negative electrode strap. At this time, it is desirable that the bismuth is present to a depth of 200 µm or more from the principal surface of the negative electrode strap. This can further enhance the effect of inhibiting the corrosion of the boundary between the negative electrode strap and the negative electrode lug portions. Note that the presence of bismuth can be confirmed, for example, by analyzing the cross section of the welding mark by a a wavelength dispersive method or an energy dispersive method using an electron probe microanalyzer (EPMA).

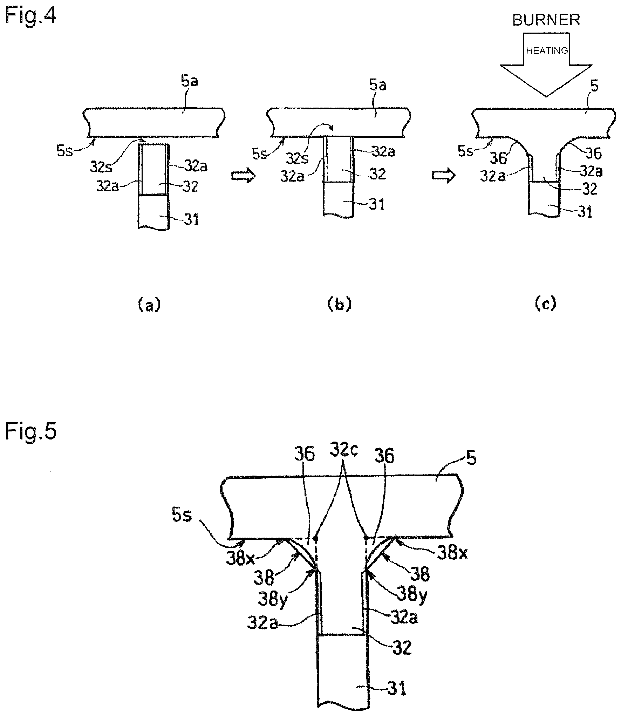

FIG. 4 is an explanatory diagram of a process of welding a negative electrode lug portion to the negative electrode strap, as viewed in a direction parallel to the liquid surface of the electrolyte and is perpendicular to the thickness direction of the negative electrode. FIG. 5 is an explanatory diagram of fillets formed at the boundary between the principal surface of the negative electrode strap and the side surfaces of the negative electrode lug portion, as viewed in the same direction.

FIG. 4 (a) shows a precursor 5a of a negative electrode strap and a negative electrode lug portion 32 that is formed integrally with a negative electrode grid 31 and includes surface layer portions 32a containing bismuth on side surfaces thereof, before they are brought into abutment against each other. FIG. 4(b) shows a state in which an upper end face 32s of the negative electrode lug portion 32 has been brought into abutment against a principal surface 5s of the precursor 5a of a negative electrode strap. FIG. 4(c) shows a negative electrode strap 5 to which the negative electrode lug portion 32 has been welded, and fillets 36 formed at the boundary between the principal surface 5s of the negative electrode strap 5 and the side surfaces of the negative electrode lug portion 32.

In FIG. 4(a), the precursor 5a of a negative electrode strap is a strap-shaped or rod-shaped member, and is formed of lead or a lead alloy. By controlling the amount of the lead or lead alloy of the precursor 5a of a negative electrode strap, it is also possible to control the depth from the principal surface of the negative electrode strap 5 where bismuth is present.

From the viewpoint of enhancing the welding workability and forming good a fillet 36, it is desirable that the thickness of the surface layer portions 32a on the side surfaces of the negative electrode lug portion 32 containing bismuth is 5 µm to 20 µm.

From the viewpoint of forming a good fillet 36, the welding between the negative electrode strap 5 and the negative electrode lug portion 32 is performed by a burner method. A burner method is a method involving providing a precursor of a strap corresponding to the lug portion, bringing an end face of the lug portion into abutment against the principal surface of the precursor, and melting the precursor and the end face of the lug portion by using a gas burner or the like, to provide a strap joined to the lug portion. With the use of the burner method, the heating temperature and the heating time at the time of welding the negative electrode strap 5 and the negative electrode lug portion 32 can be easily controlled, making it possible to easily satisfy conditions for forming a good fillet 36.

The bismuth content in the fillet is 10 mass% or more, and is desirably greater than or equal to the bismuth content in the surface layer portions 32a that is provided in advance on a side surface of the negative electrode lug portion. In the case of forming a fillet 36 having a bismuth content greater than or equal to the bismuth content in the surface layer portion 32a, the bismuth may be allowed to be segregated in the fillet 36 at the time of welding the negative electrode lug portion 32 to the negative electrode strap 5. With welding performed by the burner method, the burner heating condition can be appropriately selected, thus enabling the bismuth to be segregated in the fillet 36. This can enhance the effect of inhibiting the corrosion in the welding mark. Note that after the negative electrode lug portion 32 has been welded to the negative electrode strap 5, the bismuth content in the surface layer portion 32a may be determined by analyzing the surface layer portion 32a that has not been melted during welding.

The bismuth content in the surface layer portion 32a provided on a side surface of the negative electrode lug portion 32 is preferably 10 mass% or more and 30 parts by mass or less. This makes it possible to easily form a fillet 36 having a bismuth content of 10 mass% or more, thus achieving a prominent corrosion inhibition effect. By setting the bismuth content in the surface layer portion 32a to 10 mass% or more, the melting point of the surface layer portion 32a is lowered, enhancing the welding workability. By setting the bismuth content in the surface layer portion 32a to 30 mass% or less, the fluidity of the molten metal derived from the surface layer portion 32a is limited, allowing the bismuth to be easily segregated in the fillet 36. The bismuth content in the surface layer portion 32a is more preferably 20 mass% or more, further preferably 25 mass% or less.

At the time of heating the negative electrode lug portion 32 and the negative electrode strap 5 using a burner or the like in order to weld the negative electrode lug portion 32 to the negative electrode strap 5, an insufficient heating temperature and/or heating time makes it difficult to form a good fillet and also makes it difficult for bismuth to be segregated. On the other hand, if the heating temperature and/or heating time is excessive, the fluidity of the molten metal derived from the surface layer portion containing bismuth becomes too high, making it difficult to form a fillet. The heating temperature is 500°C to 700°C, and the heating time is preferably, but not particularly limited to, about 10 seconds (e.g., about 8 seconds to 12 seconds).

Next, a state in which fillets are formed will be described. As shown in FIG. 5, which is an enlarged view of FIG. 4(c), when a triangle 38 having a vertex angle defined by a corner portion formed by the principal surface 5s of the negative electrode strap 5 and a side surface of the negative electrode lug portion 32 is drawn, it can be determined that a good fillet 36 has been formed if a hem portion 38x of a welding mark on the negative electrode strap side and a hem portion 38y of the welding mark on the negative electrode lug portion side extend to positions away from a vertex 32c corresponding to the vertex angle along the respective sides by 100 µm or more, and the hem portion 38y on the lug portion side does not extend to a position away therefrom by greater than 500 µm. In this case, a sufficient amount of bismuth remains in the fillet 36.

It is desirable that the end point of the hem portion 38x on the negative electrode strap side is away from the vertex 32c by 200 µm or more. On the other hand, if the end point of the hem portion 38y on the lug portion side is away from the vertex 32c by greater than 500 µm, this means that during welding, the molten metal containing bismuth did not remain at the boundary between the negative electrode strap 5 and the negative electrode lug portion 32. In this case, a fillet containing 10 mass% or more of bismuth will not be formed.

Next, the bismuth content in the welding mark is measured by the following method. First, a target region for measurement is specified. The target region is obtained from the cross section of a welding mark enclosed in an isosceles triangle when an isosceles triangle having a vertex angle defined by a corner portion formed by the principal surface 5s of the negative electrode strap 5 and a side surface of the negative electrode lug portion 32 and having sides of equal length of 500 µm is drawn. If the welding mark is completely enclosed in the isosceles triangle, the bismuth content in the fillet can be obtained. On the other hand, if the welding mark protrudes from the isosceles triangle, the protruding portion is ignored, and the concentration of the bismuth contained in the welding mark is measured. The concentration of bismuth is measured for the cross section of the welding mark by performing elementary analysis by a wavelength dispersive method or an energy dispersive method using an electron probe microanalyzer (EPMA), for example.

Next, a lead-acid battery according to the present invention will be described in further detail with reference to the drawings.

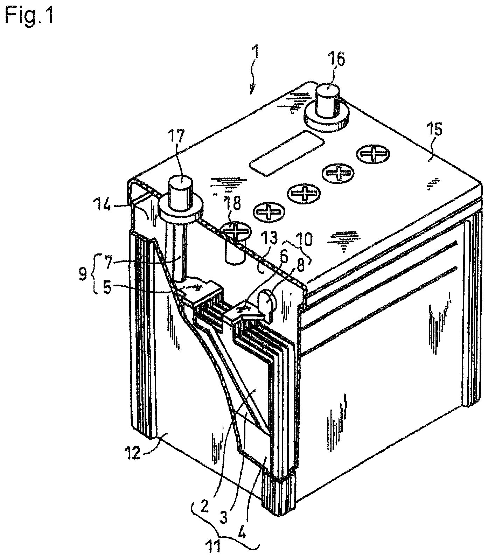

FIG. 1 is a partially cut-away perspective view of a lead-acid battery according to an embodiment of the present invention. A lead-acid battery 1 includes electrode plate groups 11 and an electrolyte (not shown), which are accommodated in a battery container 12. The battery container 12 is partitioned into a plurality of cell compartments 14 by partition walls 13, and each cell compartment 14 houses one electrode plate group 11, and also accommodates the electrolyte. Each electrode plate group 11 is formed by stacking a plurality of positive electrodes 2 and a plurality of negative electrodes 3 with separators 4 interposed therebetween.

In the cell compartment 14 located at one end portion of the battery container 12, a positive electrode strap 6 that connects lug portions 22 of the plurality of positive electrodes 2 in parallel is connected to a positive electrode connector 8. A positive electrode connection member 10 in which the positive electrode strap 6 and the positive electrode connector 8 are integrated with each other may also be formed. Meanwhile, a negative electrode pole 7 is connected to a negative electrode strap 5 that connects lug portions 32 of the plurality of negative electrodes 3 in parallel. A negative electrode connection member 9 in which the negative electrode strap 5 and the negative electrode pole 7 are integrated with each other may also be formed. Note that in the cell compartment 14 located at the other end portion of the battery container 12, a positive electrode pole is connected to the positive electrode strap 6, and a negative electrode connector is connected to the negative electrode strap 5. The positive electrode connector 8 is connected to the negative electrode connector continuously provided at the negative electrode strap 5 of the electrode plate group 11 in the adjacent cell compartment 14 via an aperture formed in the partition wall 13. Consequently, the electrode plate groups 11 in adjacent cell compartments 14 are connected in series to each other.

In each cell compartment 14, the positive electrode strap 6, the negative electrode strap 5, and the electrode plate group 11 are entirely immersed in the electrolyte. A lid 15 provided with a positive electrode terminal 16 and a negative electrode terminal 17 is mounted to the opening of the battery container 12. Gas exhaust plugs 18 for discharging the gas generated inside the battery to the outside of the battery are mounted to liquid injection ports provided in the lid 15.

### (Positive Electrode)

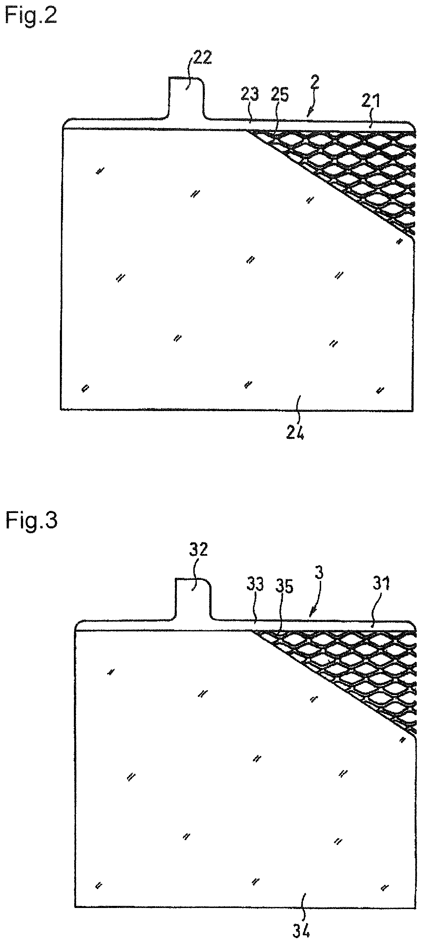

FIG. 2 is a front view of a positive electrode 2. The positive electrode 2 includes a positive electrode grid 21 and a positive electrode material mixture 24 supported on the positive electrode grid 21. The positive electrode grid 21 is an expanded grid body including an expanded mesh 25 that retains the positive electrode material mixture 24 and a frame rib 23 provided at an upper end portion of the expanded mesh 25. A positive electrode lug portion 22 is continuously connected to the frame rib 23. The positive electrode grid 21 is connected to the positive electrode strap 6 via the positive electrode lug portion 22, and the positive electrode strap 6 is connected to the positive electrode connector 8 or the positive electrode pole.

The positive electrode grid 21 and the positive electrode lug portion 22 can be obtained by expanding a lead alloy sheet. The expanding method is not particularly limited, and rotary expansion or reciprocal expansion may be adopted. The lead alloy constituting the positive electrode grid 21 contains antimony (Sb), and preferably further contains calcium (Ca) and tin (Sn). The calcium content in the lead alloy is 0.01 to 0.1 mass%, for example. The tin content in the lead alloy is 0.05 to 3 mass%, for example. Calcium mainly increases the mechanical strength of the lead alloy, and tin mainly increases the corrosion resistance of the lead alloy. The lead alloy sheet may be a stack of a lead alloy layer free of antimony and a surface layer portion containing antimony.

Lead oxide (PbO₂) is used as the positive electrode active material. The positive electrode material mixture may optionally contain a known additive in addition to the positive electrode active material.

### (Negative Electrode)

FIG. 3 is a front view of a negative electrode 3. The negative electrode 3 includes a negative electrode grid 31 and a negative electrode material mixture 34 supported on the negative electrode grid 31. The negative electrode grid 31 is an expanded grid body including an expanded mesh 35 and a frame rib 33 provided at an upper end portion of the expanded mesh 35. A negative electrode lug portion 32 is continuously connected to the frame rib 33. The negative electrode grid 31 is connected to the negative electrode strap 5 via the negative electrode lug portion 32, and the negative electrode strap 5 is connected to the negative electrode pole 7 or the negative electrode connector. The negative electrode material mixture 34 is supported on the expanded mesh 35.

The negative electrode grid 31 and the negative electrode lug portion 32 are also obtained by expanding a lead alloy sheet. The lead alloy constituting the negative electrode grid 31 preferably contains calcium (Ca) and tin (Sn). The calcium content in the lead alloy is 0.01 to 0.1 mass%, for example. The tin content in the lead alloy is 0.1 to 2.0 mass%, for example. In addition, bismuth is contained in the surface layer portion of the negative electrode lug portion 32.

Lead is used as the negative electrode active material. The lead may contain a trace amount of an alloy component. In this case, it is desirable that the negative electrode material mixture contains 0.3 parts by mass or more of carbon black per 100 parts by mass of lead. However, it is desirable that the amount of the carbon black is 1 part by mass or less per 100 parts by mass of lead.

The positive electrode and the negative electrode are formed by applying a mixture containing lead oxide, lead powder, and an aqueous sulfuric acid solution to the positive electrode grid and the negative electrode grid, and subsequently performing chemical formation treatment (charging) in the battery container of the lead-acid battery.

### (Separator)

Examples of the separator include a microporous film and a fiber sheet (or mat). Examples of the polymer material constituting the microporous film or the fiber sheet include polyolefins having acid resistance such as polyethylene and polypropylene. The fiber sheet may be formed from a polymer fiber and/or an inorganic fiber such as a glass fiber. The separator may optionally contain an additive such as a filler and/or a carbon.

### (Electrolyte)

The electrolyte includes an aqueous sulfuric acid solution. The density of the electrolyte is, for example, 1.1 to 1.35 g/cm³, preferably 1.2 to 1.35 g/cm³, more preferably 1.25 to 1.3 g/cm³. Note that as used herein, the density of the electrolyte is a density at 20°C, and it is desirable that the density of the electrolyte in a fully charged battery is within the above-described range.

Hereinafter, the present invention will be specifically described by way of examples and comparative examples. However, the present invention is not limited to the following examples.

### [Examples]

### [Example 1]

### (1) Production of Positive Electrode

A positive electrode 2 as shown in FIG. 2 was produced according to the following procedure.

A starting material powder (a mixture of lead and lead oxide), water, and a dilute sulfuric acid (density: 1.40 g/cm³) were mixed at a mass ratio of 100:15:5, thus obtaining a paste containing a positive electrode material mixture.

A ternary alloy of lead, calcium, and tin (Pb-Ca-Sn alloy) was subjected to continuous slab casting and multi-stage rolling, to produce a plate member. Thereafter, a Pb-Sb alloy containing 2.5 mass% of antimony was attached to either side of the plate member, followed by expansion, to produce a positive electrode grid 21 integral with a positive electrode lug portion 22. The tin content of the Pb-Ca-Sn alloy was adjusted to 1.8 mass%, and the calcium content to 0.05 mass%. At this time, the antimony content in the positive electrode grid was 0.025 mass%.

The expanded mesh 25 of the positive electrode grid was filled with the paste including the positive electrode material mixture, and aged and dried, to give an unformed positive electrode 2 (length: 115 mm, width: 137.5 mm, thickness: 1.5 mm) in which the positive electrode material mixture 24 was retained by the positive electrode grid 21.

### (2) Production of Negative Electrode

A negative electrode 3 as shown in FIG. 3 was produced according to the following procedure.

A starting material powder (a mixture of lead and lead oxide), water, a dilute sulfuric acid (density: 1.40 g/cm³), lignin, barium sulfate, and carbon black were mixed at a mass ratio of 100:12:7:1:0.1:0.5, thus obtaining a paste including a negative electrode material mixture.

After a plate member was produced from a Pb-Ca-Sn alloy (tin content: 0.25 mass%, calcium content: 0.07 mass%) in the same manner as the positive electrode grid, a lead alloy sheet containing bismuth was attached to either side of a portion of the plate member that corresponded to a negative electrode lug portion, followed by rolling, to provide a 10-µm-thick surface layer portion containing 23 mass% of bismuth. As the lead alloy sheet containing bismuth, a binary alloy of lead and bismuth (Pb-Bi alloy) was used. Thereafter, the plate member was expanded, to produce a negative electrode grid 31 (thickness: 1.4 mm) integral with a negative electrode lug portion 32.

The expanded mesh of the negative electrode grid 31 was filled with the paste including the negative electrode material mixture, and an unformed negative electrode 3 (length: 115 mm, width: 137.5 mm, thickness: 1.6 mm) in which the negative electrode material mixture 34 was supported on the negative electrode grid 31 was obtained in the same manner as described above.

### (3) Production of Lead-Acid Battery

A lead-acid battery 1 as shown in FIG. 1 was produced according to the following procedure.

After each negative electrode 3 was accommodated in a bag-shaped separator 4 made of a microporous polyethylene film, six positive electrodes 2 and seven negative electrodes 3 were alternately stacked. Thereafter, a negative electrode strap 5 was welded to a bundle of negative electrode lug portions 32, to form an electrode plate group 11. At this time, an end face of each of the negative electrode lug portions 32 was brought into abutment against the principal surface of a precursor of a negative electrode strap. Then, the precursor of a negative electrode strap was heated with a burner from the back side of the principal surface side thereof. The burner temperature was set at 600°C, and heating was performed for 10 seconds. In addition, a positive electrode strap 6 was welded to a bundle of positive electrode lug portions 22 in the same manner as described above.

Next, the electrode plate groups 11 were housed, one each, in six cell compartments 14 that were divided by partition walls 13 of a battery container 12. Then, a positive electrode connector 8 continuously provided at the positive electrode strap 6 and a negative electrode connector continuously provided at the negative electrode strap 5 of adjacent electrode plate group 11 were connected, thus connecting the adjacent electrode plate groups 11 to each other in series. Note that in the present example, the connection between the electrode plate groups was performed via apertures (not shown) provided in the partition walls 13.

Next, a lid 15 was mounted to the opening of the battery container 12, and a positive electrode terminal 16 and a negative electrode terminal 17 provided on the lid 15 were welded to a positive electrode pole and a negative electrode pole 7. Then, a predetermined amount of the electrolyte was injected from liquid injection ports provided in the lid 15, and chemical formation was performed in the battery container. Thereafter, the density of the electrolyte was adjusted to a final density of 1.28 g/cm³.

After the formation, gas exhaust plugs 18 each having an exhaust port for discharging the gas generated inside the battery to the outside of the battery were mounted to the liquid injection ports, thus producing a lead-acid battery (A1) of 55D23 (12 V, 48 Ah) prescribed in JIS D5301. Note that in the finished battery, the electrode plate groups 11, the positive electrode strap 6, and the negative electrode strap 5 were entirely immersed in the electrolyte.

### [Example 2]

A lead-acid battery (A2) was produced in the same manner as in Example 1 except that the bismuth content in the surface layer portion of the side surface of the negative electrode lug portion was changed to 12 mass%.

### [Example 3]

A lead-acid battery (A3) was produced in the same manner as in Example 1 except that the bismuth content in the surface layer portion of the side surface of the negative electrode lug portion was changed to 28 mass%.

### [Comparative Example 1]

A lead-acid battery (B1) was produced in the same manner as in Example 1 except that the bismuth content in the surface layer portion of the side surface of the negative electrode lug portion was changed to 35 mass%.

### [Comparative Example 2]

A lead-acid battery (B2) was produced in the same manner as in Example 1 except that the Pb-Sb alloy was not attached to either side of the plate member at the time of producing the positive electrode grid and the antimony content was 0 mass %.

### [Comparative Example 3]

A lead-acid battery (B3) was produced in the same manner as in Example 1 except that the burner temperature was changed to 450°C at the time of welding the negative electrode lug portions to the negative electrode strap.

### [Comparative Example 4]

A lead-acid battery (B4) was produced in the same manner as in Example 1 except that the burner temperature was changed to 750°C at the time of welding the negative electrode lug portions to the negative electrode strap.

### [Comparative Example 5]

A lead-acid battery (B5) was produced in the same manner as in Example 1 except that the heating time with the burner was changed to 5 seconds at the time of welding the negative electrode lug portions to the negative electrode strap.

### [Comparative Example 6]

A lead-acid battery (B6) was produced in the same manner as in Example 1 except that the heating time with the burner was changed to 20 seconds at the time of welding the negative electrode lug portions to the negative electrode strap.

### [Comparative Example 7]

A lead-acid battery (B7) was produced in the same manner as in Example 1 except that the bismuth content in the surface layer portion of the side surface of the negative electrode lug portion was changed to 8 mass%.

### [Evaluation 1]

For the batteries A1 to A3 of Examples 1 to 3 and the batteries B1 to B7 of Comparative Examples 1 to 7 described above, the following evaluation was performed, and the results are shown in Table 1.

### <Fillet Formation>

Welding marks formed at the boundary between the negative electrode lug portions and the negative electrode strap were observed. When an isosceles triangle 38, as shown in FIG. 5, having a vertex angle defined by a corner portion formed by the principal surface 5s of the negative electrode strap 5 and a side surface of a negative electrode lug portions 32 is drawn, if the end point of the hem portion 38x of the welding mark on the negative electrode strap side is away from the vertex 32c corresponding to the vertex angle by 100 µm or more and the end point of the hem portion 38y of the welding mark on the lug portion side is not away therefrom by more than 500 µm, this is indicated as "Good". On the other hand, if the end point of the hem portion 38x is away from the vertex 32c by less than 100 µm, this is indicated as "Poor". Furthermore, if the end point of the hem portion 38y is away from the vertex 32 by more than 500 µm, this is indicated as "Fair".

### <Bismuth Content in Fillet>

As shown in FIG. 5, assuming an isosceles triangle 38 having a vertex angle 32c defined by the corner portion formed by the principal surface 5s of the negative electrode strap 5 and a side surface of a negative electrode lug portion 32 and having sides of equal length of 500 µm, elementary analysis of the cross section of a welding mark enclosed in the isosceles triangle was performed by a wavelength dispersive method using an electron probe microanalyzer (EPMA), to measure the bismuth concentration. When the welding mark protruded from the isosceles triangle having a length of equal sides of 500 µm, the protruding area was ignored.

### <Life Test>

For the above-described batteries, a light-load life test prescribed in JIS D5301 was performed. However, for the sake of convenience, the test atmospheric temperature was changed from 40°C liquid phase to 75°C gas phase, and the duration of 25 A discharge in charge/discharge cycles was changed from 4 minutes to 1 minute. That is, under 75°C environment, each of the test batteries was discharged with a discharge current of 25 A for 1 minute, and thereafter charged with a charge voltage of 14.8 V (maximum charge current: 25 A) for 10 minutes. This step was repeatedly performed. Each time this step was repeated for 480 cycles, the battery was discharged with a discharge current of 320 A for 30 seconds. Then, the number of cycles repeated until the voltage at the 30th second during the 320 A discharging had dropped to 7.2 V was determined as the life number of cycles. "Good" indicates that the life number of cycles reached 4000, and "Poor" indicates that the life number of cycles was less than 4000.

### <Corrosion Amount>

After the life test, each battery was disassembled, and a negative electrode was washed with water to remove the sulfuric acid component, and thereafter the negative electrode material mixture was removed so that only the negative electrode grid was left. The negative electrode grid was immersed in an alkaline solution of mannitol for about 12 hours, to remove the corrosion layer present on the surface of the root of the lug portion. The corrosion amount was calculated based on the reduced amount of the thickness of the lug portion after the life test relative to the thickness thereof before the life test. "Good" indicates that the reduced amount was less than 5%, "Fair" indicates that the reduced amount was 5% or more and less than 10%, and "Poor" indicates that the reduced amount was 10% or more.

**[Table 1]**

| | Heating conditions | Bi content of surface layer portion (mass%) | Sb content of positive electrode grid (mass%) | Fillet formation | Bismuth content of fillet (mass%) | Corrosion amount | Cycle life |
|---|---|---|---|---|---|---|---|
| A1 | 600C°/10 sec | 23 | 0.025 | Good | > 23 | Good | Good |
| A2 | 600C°/10 sec | 12 | 0.025 | Good | > 12 | Good | Good |
| A3 | 600C°/10 sec | 28 | 0.025 | Good | > 28 | Good | Good |
| B1 | 600C°/10 sec | 35 | 0.025 | Fair | <1 | Fair | Poor |
| B2 | 600C°/10 sec | 35 | 0 | Fair | <1 | Good | Poor |
| B3 | 450C°/10 sec | 23 | 0.025 | Poor | - | Poor | Poor |
| B4 | 750C°/10 sec | 23 | 0.025 | Fair | <1 | Fair | Poor |
| B5 | 600C°/5 sec | 23 | 0.025 | Poor | - | Poor | Poor |
| B6 | 600C°/20 sec | 23 | 0.025 | Fair | <1 | Fair | Poor |
| B7 | 600C°/10 sec | 8 | 0.025 | Poor | - | Poor | Poor |

### [Industrial Applicability]

A lead-acid battery according to the present invention is suitable for applications where a high cycle life is required, and is particularly preferred as a power source installed on a vehicle including an idling stop system.

### [Reference Signs List]

1.... Lead-acid battery
2.... Positive electrode
3.... Negative electrode
4.... Separator
5. ... Negative electrode strap
5a. ... Precursor of negative electrode strap
5s. ... Principal surface of negative electrode strap (or precursor)
6. ... Positive electrode strap
7.... Negative electrode pole
8. ... Positive electrode connector
9. ... Negative electrode connection member
10.... Positive electrode connection member
11.... Electrode plate group
12.... Battery container
13. ... Partition wall
14. ... Cell compartment
15.... Lid
16.... Positive electrode terminal
17.... Negative electrode terminal
18.... Gas exhaust plug
21.... Positive electrode grid
22.... Positive electrode lug portion
23.... Frame rib of positive electrode grid
24. ... Positive electrode material mixture
25.... Expanded mesh of positive electrode grid
31. ... Negative electrode grid
32. ... Negative electrode lug portion
32a.... Surface layer portion containing bismuth
32c.... Vertex corresponding to vertex angle
32s.... Upper end face of negative electrode lug portion 32
33. ... Frame rib of negative electrode grid
34. ... Negative electrode material mixture
35. ... Expanded mesh of negative electrode grid
36. ... Fillet
38. ... Triangle having vertex angle defined by corner portion formed by principal surface of negative electrode strap and side surface of negative electrode lug portion
38x.... Hem portion of welding mark on negative electrode strap side
38y.... Hem portion of welding mark on negative electrode lug portion side

## Claims

1. A lead-acid battery (1) comprising:
an electrode plate group (11); and an electrolyte containing sulfuric acid, wherein
the electrode plate group (11) includes: a plurality of positive electrodes (2); a positive electrode strap (6) that connects the plurality of positive electrodes (2) in parallel; a plurality of negative electrodes (3); a negative electrode strap (5) that connects the plurality of negative electrodes (3) in parallel; and separators (4) interposed between the positive electrodes (2) and the negative electrodes (3) that are adjacent to each other,
each of the plurality of positive electrodes (2) includes: a positive electrode active material; a positive electrode grid (21) that supports the positive electrode active material thereon; and a positive electrode lug portion (22) that is integral with the positive electrode grid (21) and connects the positive electrode (2) to the positive electrode strap (6),
each of the plurality of negative electrodes (3) includes: a negative electrode active material; a negative electrode grid (31) that supports the negative electrode active material thereon; and a negative electrode lug portion (32) that is integral with the negative electrode grid (31) and connects the negative electrode (3) to the negative electrode strap (5),
the positive electrode grid (21) contains antimony,
a side surface of the negative electrode lug portion (32) includes a surface layer portion (32a) containing bismuth,
the negative electrode lug portion (32) is welded to a principal surface (5s) of the negative electrode strap (5), and a fillet (36) containing bismuth is formed at a boundary between the principal surface (5s) of the negative electrode strap (5) and the side surface of the negative electrode lug portion (32), and
the bismuth content in the fillet (36) is 10 mass% or more.

2. The lead-acid battery (1) according to claim 1, wherein
the bismuth content in the fillet (36) is greater than or equal to the bismuth content in the surface layer portion (32a).

3. The lead-acid battery (1) according to claim 1 or 2, wherein
the surface layer portion (32a) contains 10 mass% or more and 30 mass% or less of bismuth.

4. The lead-acid battery (1) according to any one of claims 1 to 3, wherein
the antimony content in the positive electrode grid (21) is 0.01 mass% or more and 0.1 mass% or less.

5. The lead-acid battery (1) according to any one of claims 1 to 4, wherein
bismuth is present at a depth of 200 µm or more from the principal surface (5s) of the negative electrode strap (5).

6. A method for manufacturing the lead-acid battery (1) according to claim 1, comprising the steps of:
(i) stacking the plurality of positive electrodes (2) and the plurality of negative electrodes (3) with the separators (4) interposed therebetween, to obtain a stack; and
(ii) welding the positive electrode lug portions (22) included in the stack to the positive electrode strap (6), and further welding the negative electrode lug portions (32) included in the stack to the negative electrode strap (5), to form the electrode plate group (11), wherein
the step of welding the negative electrode lug portions (32) to the negative electrode strap (5) includes the steps of:
providing the negative electrode strap (5);
bringing an end face of each of the negative electrode lug portions (32) into abutment against a principal surface (5s) of the negative electrode strap (5), the negative electrode lug portions (32) each including a surface layer portion (32a) containing 10 mass% or more and 30 mass% or less of bismuth on a side surface thereof; and
melting at least the principal surface (5s) of the negative electrode strap (5) and the end face of each of the negative electrode lug portions (32) at 500 to 700 °C, to weld the negative electrode lug portions (32) to the negative electrode strap (5), and to form the fillet (36) containing bismuth, the content of which in the fillet (36) is 10 mass% or more, at a boundary between the principal surface (5s) of the negative electrode strap (5) and the side surface of each of the negative electrode lug portions (32).

## Patentansprüche

1. Blei-Säure-Batterie (1), umfassend:
eine Elektrodenplattengruppe (11); und eine Elektrolyt enthaltende Schwefelsäure, wobei
die Elektrodenplattengruppe (11) aufweist: mehrere positive Elektroden (2); ein positives Elektrodenband (6), das die mehreren positiven Elektroden (2) parallel schaltet; mehrere negative Elektroden (3); ein negatives Elektrodenband (5), das die mehreren negativen Elektroden (3) parallel schaltet; und Separatoren (4), die zwischen den positiven Elektroden (2) und den negativen Elektroden (3), die benachbart zueinander liegen, zwischengeordnet sind,
jede der mehreren positiven Elektroden (2) aufweist: ein Aktivmaterial für positive Elektroden; ein positives Elektrodengitter (21), das das Aktivmaterial für positive Elektroden darauf trägt; und einen Positivelektroden-Fahnenabschnitt (22), der mit dem positiven Elektrodengitter (21) einstückig ist und die positive Elektrode (2) mit dem positiven Elektrodenband (6) verbindet,
jede der mehreren negativen Elektroden (3) aufweist: ein Aktivmaterial für negative Elektroden; ein negatives Elektrodengitter (31), das das Aktivmaterial für negative Elektroden darauf trägt; und einen Negativelektroden-Fahnenabschnitt (32), der mit dem negativen Elektrodengitter (31) einstückig ist und die negative Elektrode (3) mit dem negativen Elektrodenband (5) verbindet,
das positive Elektrodengitter (21) Antimon enthält,
eine Seitenfläche des Negativelektroden-Fahnenabschnitts (32) einen Flächenschichtabschnitt (32a) aufweist, der Wismut enthält,
der Negativelektroden-Fahnenabschnitt (32) an eine Hauptfläche (5s) des negativen Elektrodenbands (5) geschweißt ist und eine Rundung (36), die Wismut enthält, an einer Grenze zwischen der Hauptfläche (5s) des negativen Elektrodenbands (5) und der Seitenfläche des Negativelektroden-Fahnenabschnitts (32) gebildet ist, und
der Wismutgehalt in der Rundung (36) 10 Masse-% oder mehr beträgt.

2. Blei-Säure-Batterie (1) nach Anspruch 1, wobei der Wismutgehalt in der Rundung (36) größer oder gleich dem Wismutgehalt in dem Flächenschichtabschnitt (32a) ist.

3. Blei-Säure-Batterie (1) nach Anspruch 1 oder 2, wobei der Flächenschichtabschnitt (32a) 10 Masse-% oder mehr und 30 Masse-% oder weniger Wismut enthält.

4. Blei-Säure-Batterie (1) nach einem der Ansprüche 1 bis 3, wobei
der Antimongehalt in dem positiven Elektrodengitter (21) 0,01 Masse-% oder mehr und 0,1 Masse-% oder weniger beträgt.

5. Blei-Säure-Batterie (1) nach einem der Ansprüche 1 bis 4, wobei
Wismut in einer Tiefe von 200 µm oder mehr von der Hauptfläche (5s) des negativen Elektrodenbands (5) vorliegt.

6. Verfahren zum Herstellen der Blei-Säure-Batterie (1) nach Anspruch 1, umfassend die Schritte zum:
(i) Stapeln der mehreren positiven Elektroden (2) und der mehreren negativen Elektroden (3) mit den dazwischen zwischengeordneten Separatoren (4), um einen Stapel zu erhalten; und
(ii) Schweißen der Positivelektroden-Fahnenabschnitte (22), die in dem Stapel enthalten sind, an das positive Elektrodenband (6) und ferner Schweißen der Negativelektroden-Fahnenabschnitte (32), die in dem Stapel enthalten sind, an das negative Elektrodenband (5), um die Elektrodenplattengruppe (11) zu bilden, wobei
der Schritt des Schweißens der Negativelektroden-Fahnenabschnitte (32) an das negative Elektrodenband (5) die Schritte umfasst zum:
Vorsehen des negativen Elektrodenbands (5);
Anlegen einer Endfläche jedes der Negativelektroden-Fahnenabschnitte (32) an eine Hauptfläche (5s) des negativen Elektrodenbands (5), wobei die Negativelektroden-Fahnenabschnitte (32) jeweils einen Flächenschichtabschnitt (32a) aufweisen, der 10 Masse-% oder mehr und 30 Masse-% oder weniger Wismut auf einer Seitenfläche davon enthält; und
Schmelzen mindestens der Hauptfläche (5s) des negativen Elektrodenbands (5) und der Endfläche jedes der Negativelektroden-Fahnenabschnitte (32) bei 500 bis 700 °C, um die Negativelektroden-Fahnenabschnitte (32) an das negative Elektrodenband (5) zu schweißen und um die Rundung (36), die Wismut enthält, dessen Gehalt in der Rundung (36) 10 Massen-% oder mehr beträgt, an der Grenze zwischen der Hauptfläche (5s) des negativen Elektrodenbands (5) und der Seitenfläche jedes der Negativelektroden-Fahnenabschnitte (32) zu bilden.

## Revendications

1. Batterie plomb-acide (1) comprenant :
un groupe de plaques d'électrodes (11); et un électrolyte contenant de l'acide sulfurique, dans lequel le groupe de plaques d'électrodes (11) comprend : une pluralité d'électrodes positives (2); une bande d'électrodes positives (6) qui relie la pluralité d'électrodes positives (2) en parallèle; une pluralité d'électrodes négatives (3) ;
une bande d'électrodes négatives (5) qui relie la pluralité d'électrodes négatives (3) en parallèle; et des séparateurs (4) interposés entre les électrodes positives (2) et les électrodes négatives (3) qui sont adjacentes les unes aux autres,
chacune de la pluralité d'électrodes positives (2) comprend : un matériau actif d'électrode positive; une grille d'électrode positive (21) qui supporte le matériau actif d'électrode positive sur celle-ci; et une partie de patte d'électrode positive (22) qui fait partie intégrante de la grille d'électrode positive (21) et qui relie l'électrode positive (2) à la bande d'électrodes positives (6),
chacune de la pluralité d'électrodes négatives (3) comprend : un matériau actif d'électrode négative; une grille d'électrode négative (31) qui supporte le matériau actif d'électrode négative sur celle-ci; et une partie de patte d'électrode négative (32) qui fait partie intégrante de la grille d'électrode négative (31) et qui relie l'électrode négative (3) à la bande d'électrodes négatives (5),
la grille d'électrode positive (21) contient de l'antimoine, une surface latérale de la partie de patte d'électrode négative (32) comprend une partie de couche de surface (32a) contenant du bismuth,
la partie de patte d'électrode négative (32) est soudée à une surface principale (5s) de la bande d'électrodes négatives (5), et un filet (36) contenant du bismuth est formé à une limite entre la surface principale (5s) de la bande d'électrodes négatives (5) et la surface latérale de la partie de patte d'électrode négative (32), et
la teneur en bismuth dans le filet (36) est de 10 % en masse ou plus.

2. Batterie plomb-acide (1) selon la revendication 1, dans laquelle
la teneur en bismuth dans le filet (36) est supérieure ou égale à la teneur en bismuth dans la partie de couche de surface (32a).

3. Batterie plomb-acide (1) selon la revendication 1 ou 2, dans laquelle
la partie de couche de surface (32a) contient 10 % en masse ou plus et 30 % en masse ou moins de bismuth.

4. Batterie plomb-acide (1) selon l'une quelconque des revendications 1 à 3, dans laquelle
la teneur en antimoine dans la grille d'électrode positive (21) est de 0,01 % en masse ou plus et de 0,1 % en masse ou moins.

5. Batterie plomb-acide (1) selon l'une quelconque des revendications 1 à 4, dans laquelle
du bismuth est présent à une profondeur de 200 µm ou plus de la surface principale (5s) de la bande d'électrodes négatives (5) .

6. Procédé de fabrication de la batterie au plomb-acide (1) selon la revendication 1, comprenant les étapes consistant à :
(i) empiler la pluralité d'électrodes positives (2) et la pluralité d'électrodes négatives (3) avec les séparateurs (4) interposés entre elles, pour obtenir un empilement; et
(ii) souder les parties de patte d'électrode positive (22) incluses dans l'empilement à la bande d'électrodes positives (6), et souder en outre les parties de patte d'électrode négative (32) incluses dans l'empilement à la bande d'électrodes négatives (5), pour former le groupe de plaques d'électrodes (11), dans lequel
l'étape de soudage des parties de patte d'électrode négative (32) à la bande d'électrodes négatives (5) comprend les étapes consistant à :
fournir la bande d'électrodes négatives (5);
amener une face d'extrémité de chacune des parties de patte d'électrode négative (32) en butée contre une surface principale (5s) de la bande d'électrodes négatives (5), les parties de patte d'électrode négative (32) comprenant chacune une partie de couche de surface (32a) contenant 10 % en masse ou plus et 30 % en masse ou moins de bismuth sur une surface latérale de celles-ci; et
faire fondre au moins la surface principale (5s) de la bande d'électrodes négatives (5) et la face d'extrémité de chacune des parties de patte d'électrode négative (32) entre 500 et 700 °C, pour souder les parties de patte d'électrode négative (32) à la bande d'électrodes négatives (5), et pour former le filet (36) contenant du bismuth, dont la teneur dans le filet (36) est de 10 % en masse ou plus, à une limite entre la surface principale (5s) de la bande d'électrodes négatives (5) et la surface latérale de chacune des parties de patte d'électrode négative (32).
